# EUROPEAN PATENT APPLICATION

(11) **EP 4 633 107 A1**
(43) Date of publication of application: **15.10.2025**
(21) Application number: 24216075.2
(22) Date of filing: 28.11.2024
(51) Int. Cl.: H04L 45/02, H04L 45/24, H04L 45/00, H04L 45/64

(54) **PATH SELECTING METHOD AND APPARATUS BASED ON A SOFTWARE-DEFINED WIDE AREA NETWORK END-TO-END POLICY AND DEVICE**

(30) Priority: 11.04.2024 CN 202410439183
(71) Applicant: New H3C Technologies Co., Ltd., Hangzhou, Zhejiang 310052 (CN)
(72) Inventor: JIANG, Wendong, BEIJING, 100102 (CN)
(74) Representative: IPAZ

(57) **Abstract**

The present disclosure provides a path selecting method and apparatus based on a software-defined wide area network distributed end-to-end policy and a device, to solve the technical problem that distributed end-to-end intelligent policy routing cannot be realized due to heterogeneous start and end points. The present disclosure provides a device with a tunnel-based IFIT quality detection function and the ability to support specifying end point parameters, takes the controller as a bridge for synchronizing quality detection information of the blinding segment identifier BSID, and facilitates the interaction of quality detection information between devices from different manufacturers, thereby achieving distributed end-to-end policy routing in the SDWAN Srv6 networking environment.

## Description

The present disclosure claims the priority to the Chinese patent application 202410439183.0 filed with the China National Intellectual Property Administration (CNIPA) on April 11, 2024 and entitled "Path Selecting Method and Apparatus Based on a Software-Defined Wide Area Network End-to-End Policy and Device", which is incorporated herein by reference in its entirety.

### Technical Field

The present disclosure relates to the field of communication and cloud computing technology, and in particular to a path selecting method and a path selecting apparatus based on a software-defined wide area network end-to-end policy, and a device.

### Background

Currently, due to the need for expanding SRv6 (Segment Routing IPv6) networks from backbone networks to branch/outlet networks in certain application scenarios (such as in the financial industry), Software-Defined Wide Area Network (SDWAN) SRv6 has been proposed. However, the traditional centralized wide area backbone network traffic scheduling solution is not suitable for SDWAN scenarios. Therefore, the distributed traffic scheduling solution with the intelligent policy routing (IPR) is considered for the following reasons:
1) The traditional wide area backbone network traffic scheduling scheme is to configure one SRv6 Policy separately for each service, and each service performs end-to-end traffic scheduling based on the path change of the SRv6 Policy separately. In the SDWAN scenario, the number of branch/ outlet accesses can reach tens of thousands, which is much greater than the number of WAN accesses. At the same time, there are more service categories than the backbone network. If the traditional WAN scheduling scheme is followed, the number of policies will be very large and the device cannot support the specifications for such large number of policies.
2) The branches/outlets themselves are low-end devices with relatively low performance and can support fewer number of policies than wide area backbone network devices.
3) The increase in the number of tunnels also puts greater pressure on the centralized scheduling of the controller, and the scheduling may not be timely. The distributed scheduling solution can ensure the timeliness of scheduling.
4) In some application scenarios, such as financial networking, the characteristics of the network determine that branch access paths will not be as many as the wide area network, and the total possible paths are more controllable.
5) However, in the current SDWAN SRv6 networking environment, when the device manufacturers of the start and end points are different, distributed end-to-end intelligent policy routing cannot yet be implemented.

### Summary

In view of the above, the present disclosure provides a path selecting method, apparatus based on a software-defined wide area network distributed end-to-end policy, and device to solve the technical problem of inability to implement distributed end-to-end intelligent policy routing due to heterogeneous start and end points.

According to an aspect of examples of the present disclosure, the present disclosure provides a path selecting method based on a software-defined wide area network end-to-end policy, which is applied to a controller in a domain where a start point of a service flow of a designated service is located, the method includes:
deploying a mapping relationship between the designated service and a first traffic engineering classification for the start point;
issuing configuration to enable the start point to introduce the service flow of the designated service into a first segment routing policy group through a routing prefix, wherein the first segment routing policy group is provided with a first intelligent policy routing to which the first traffic engineering classification is mapped;
deploying a plurality of source access domain segment routing policies for the start point, and configuring each source access domain segment routing policy with a binding segment identifier BSID mapping relationship corresponding to a plurality of end-to-end paths, wherein each source access domain segment routing policy has a different path but has a same end point, and the first intelligent policy routing is provided with matching priorities of the plurality of source access domain segment routing policies;
enabling an In-situ Flow Information Telemetry IFIT path quality detection function for a plurality of paths in the domain bound to the plurality of source access domain segment routing policies;
receiving IFIT path quality detection information sent by a controller in a further domain through which the service flow passes, to obtain IFIT path quality detection information corresponding to BSIDs in the further domain in the BSID mapping relationship;
pushing the obtained IFIT path quality detection information corresponding to the BSIDs in the further domain in the BSID mapping relationship to the start point, such that the start point calculates end-to-end path quality of the plurality of source access domain segment routing policies according to IFIT path quality detection information in the domain where the start point is located and the IFIT path quality detection information corresponding to the BSIDs in the further domain pushed by the controller, and selects a service flow path based on the first intelligent policy routing.

Further, the method further includes: generating a list of BSIDs according to the BSID mapping relationship, and registering the list of BSIDs for which IFIT path quality detection information needs to be synchronized, with the controller in the further domain associated with the service flow through a preset interface, such that the controller in the further domain synchronizes the IFIT path quality detection information with the controller in the domain where the start point is located according to the list of BSIDs.

According to an aspect of examples of the present disclosure, the present disclosure also provides a path selecting method based on a software-defined wide area network end-to-end policy, which is applied to a controller in a further domain other than a source access domain wherein a start point is located, through which a service flow of a designated service passes, the method includes:
deploying a segment routing policy for a segmented path of the service flow of the designated service through the controller in the further domain;
receiving a list of BSIDs sent by a controller in the source access domain where the start point of the service flow is located, and deploying an IFIT path quality detection function for the segmented path in the further domain in the list of BSIDs;
after receiving IFIT path quality detection information related to the segmented path in the further domain, sending the IFIT path quality detection information of the segmented path corresponding to a BSID in the further domain in the list of BSIDs to the controller in the source access domain where the start point of the service flow is located.

According to an aspect of examples of the present disclosure, the present disclosure provides a path selecting method based on a software-defined wide area network end-to-end policy, which is applied to a start point of a service flow of a designated service is located, the method includes:
receiving and applying a mapping relationship between the designated service and a first traffic engineering classification deployed by a controller in a source access domain where the start point is located;
introducing the service flow of the designated service into a first segment routing policy group through a routing prefix, wherein the first segment routing policy group is provided with a first intelligent policy routing to which the first traffic engineering classification is mapped;
receiving and applying a plurality of source access domain segment routing policies deployed by the controller in the source access domain, and configuring each source access domain segment routing policy with a binding segment identifier BSID mapping relationship corresponding to a plurality of end-to-end paths, wherein each source access domain segment routing policy is bound to a different path in the source access domain, and each source access domain segment routing policy has a same end point;
receiving and applying matching priorities of the plurality of source access domain segment routing policies provided by the controller in the source access domain for the first intelligent policy routing;
receiving and applying an IFIT path quality detection function deployed by the controller in the source access domain for a plurality of paths in the source access domain bound to the plurality of source access domain segment routing policies;
calculating end-to-end path quality of the plurality of source access domain segment routing policies according to IFIT path quality detection information in the source access domain and IFIT path quality detection information corresponding to BSIDs in a further domain pushed by the controller, and selecting a service flow path based on the first intelligent policy routing.

According to an aspect of examples of the present disclosure, the present disclosure provides a path selecting apparatus based on a software-defined wide area network end-to-end policy, which is applied to a controller in a domain where a start point in a service flow of a designated service is located, the apparatus comprises:
a deploying module, to deploy a mapping relationship between the designated service and a first traffic engineering classification for the start point; deliver configuration to enable the start point to introduce the service flow of the designated service into a first segment routing policy group through a routing prefix, the first segment routing policy group being provided with a first intelligent policy routing to which the first traffic engineering classification is mapped; and deploy a plurality of source access domain segment routing policies for the start point, each source access domain segment routing policy having a different path but a same end point, configure each source access domain segment routing policy with a binding segment identifier BSID mapping relationship corresponding to a plurality of end-to-end paths; the first intelligent policy routing being provided with matching priorities of the plurality of source access domain segment routing policies; enable an In-situ Flow Information Telemetry IFIT path quality detection function for a plurality of paths in the domain bound to the plurality of source access domain segment routing policies;
a path quality information push module, to receive IFIT path quality detection information sent by a controller in a further domain through which the service flow passes to obtain IFIT path quality detection information corresponding to BSIDs in the further domain in the BSID mapping relationship; and push the obtained IFIT path quality detection information corresponding to the BSIDs in the further domain in the BSID mapping relationship to the start point, such that the start point calculates end-to-end path quality of the plurality of source access domain segment routing policies according to IFIT path quality detection information in the domain where the start point is located and the IFIT path quality detection information corresponding to the BSIDs in the further domain pushed by the controller, and selects a service flow path based on the first intelligent policy routing.

Further, the apparatus further comprises:
a BSID list generating module, to generate a list of BSIDs according to the BSID mapping relationship, register the list of BSIDs for which IFIT path quality detection information needs to be synchronized, with the controllers in the further domain associated with the service flow through a preset interface, such that the controller in the further domain synchronizes the IFIT path quality detection information with the controller in the domain where the start point is located according to the list of BSIDs.

According to an aspect of examples of the present disclosure, the present disclosure also provides a path selecting apparatus based on a software-defined wide area network end-to-end policy, which is applied to a controller in a further domain other than a source access domain wherein a start point is located, through which a service flow of a designated service passes, the apparatus comprises:
a second deploying module, to deploy a segment routing policy for a segmented path of the service flow of the designated service; receive a list of BSIDs sent by a controller in the source access domain where the start point of the service flow is located, and deploy an IFIT path quality detection function for the segmented path in the further domain in the list of BSIDs;
a quality information synchronization module, to send, after receiving IFIT path quality detection information related to the segmented path in the domain, the IFIT path quality detection information of the segmented path corresponding to a BSID in the further domain in the list of BSIDs to the controller in the source access domain where the start point of the service flow is located.

According to an aspect of examples of the present disclosure, the present disclosure provides a path selecting apparatus based on a software-defined wide area network end-to-end policy, which is applied to a start point of a service flow of a designated service is located, the apparatus comprises:
a configuration module, to receive and apply a mapping relationship between the designated service and a first traffic engineering classification deployed by a controller in a source access domain where the start point is located; receive and apply configuration issued by the controller in the source access domain to introduce the service flow of the designated service into a first segment routing policy group through a routing prefix, the first segment routing policy group being provided with a first intelligent policy routing to which the first traffic engineering classification is mapped; receive and apply a plurality of source access domain segment routing policies deployed by the controller in the source access domain, each source access domain segment routing policy being bound to a different path in the source access domain, each source access domain segment routing policy having a same end point, configure each source access domain segment routing policy with a binding segment identifier BSID mapping relationship corresponding to a plurality of end-to-end paths; receive and apply matching priorities of the plurality of source access domain segment routing policies provided by the controller in the source access domain for the first intelligent policy routing; receive and apply an IFIT path quality detection function deployed by the controller in the source access domain for a plurality of paths in the source access domain bound to the plurality of source access domain segment routing policies;
a path selecting module, to calculate end-to-end path quality of the plurality of source access domain segment routing policies according to IFIT path quality detection information in the source access domain where the start point is located and IFIT path quality detection information corresponding to BSIDs in a further domain pushed by the controller, and select a service flow path based on the first intelligent policy routing.

According to an aspect of examples of the present disclosure, the present disclosure further provides an electronic device, comprising a processor, a communication interface, a storage medium, and a communication bus, wherein the processor, the communication interface, and the storage medium complete communication with each other through the communication bus;
the storage medium is to store a computer program;
the processor is to implement any of the above path selecting methods based on a software-defined wide area network end-to-end policy when executing the computer program stored on the storage medium.

The present disclosure provides a device with a tunnel based IFIT quality detection function and the ability to support specifying end point parameters, enabling the controller as a bridge for synchronizing quality detection information of the blinding segment identifier BSID, and enabling the interaction of quality detection information between devices from different manufacturers, thereby achieving distributed end-to-end policy routing in the SDWAN Srv6 networking environment.

### Brief Description of the Drawings

In order to explain the examples of the present disclosure or the technical solutions in the prior art more clearly, the drawings that need to be used in describing the examples of the present disclosure or the prior art will be briefly introduced below. Obviously, the drawings in the following description are only some examples recorded in the present disclosure. For those of ordinary skill in the art, other drawings can also be obtained based on these drawings of the examples of the present disclosure.
Fig. 1 is an example diagram of a single-segment distributed path selecting network;
Fig. 2 is an example diagram of a routing device path selecting mechanism for a distributed intelligent policy in a single-segment distributed path selecting network;
Fig. 3 is an example diagram of a two-segment distributed path selecting and centralized path selecting network;
Fig. 4 is an example diagram of a two-segment distributed path selecting and centralized path selecting configuration scheme;
Fig. 5 is an example diagram of a three-segment distributed path selecting and centralized path selecting network;
Fig. 6 is an example diagram of a three-segment distributed path selecting and centralized path selecting configuration scheme;
Fig. 7 is an example diagram of SDWAN networking using an end-to-end policy path selecting scheme provided by the present disclosure according to an example of the present disclosure;
FIG. 8 is a schematic structural diagram of an electronic device used to implement a path selecting method based on a software-defined wide area network end-to-end policy provided by an example of the present disclosure.

### Detailed Description

The terms used in examples of the present disclosure are only for the purpose of describing specific examples, rather than limit the examples of the present disclosure. As used in the examples of the present disclosure, the singular forms "a", "the" and "this" are intended to include the plural forms as well, unless the context clearly dictates otherwise. Although the examples of the present disclosure may be described by ways of first, second, and third, such way of description is only used to distinguish similar information, entities, or steps, and is not used to describe a specific order or sequence. For example, without departing from the scope of the examples of the present disclosure, the first information may also be called second information, and similarly, the second information may also be called first information. For another example, in some scenarios, the first information may refer to one piece of information or multiple pieces of information of a same type. Further, the word "if" as used may be interpreted as "when" or "while" or "in response to determining". "And/or" in the present disclosure is just an association relationship describing associated objects, indicating that there can be three relationships, for example, A and/or B, which can mean: A exists alone, A and B exist simultaneously, and B exists alone, wherein A and B can be singular or plural. Also, in the description of the present disclosure, unless otherwise specified, "a plurality of" means two or more than two. "At least one of the following" or similar expressions thereof refers to any combination of these items, including any combination of a single item or a plurality of items. For example, at least one of a, b, or c can mean: a, b, c, a-b, a-c, b-c, or a-b-c, where a, b, c can be single or plural.

In order to clearly illustrate the process of discovering and solving technical problems of the present disclosure, several network application scenarios and existing technical problems will be described in detail below, taking a cross-regional bank network as an example.

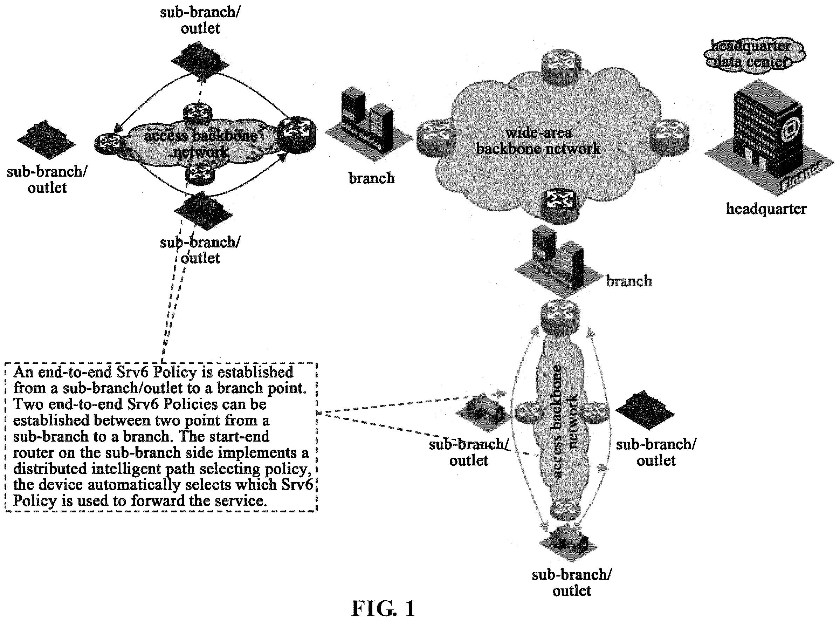

Fig. 1 is an example diagram of a single-segment distributed path selecting network. The financial industry networking is taken as an example below to illustrate the single-segment distributed path selecting networking and implementation mechanism (sub-branch/outlet→branch service):
As shown in the example in Fig. 1, an end-to-end Srv6 Policy is established from a sub-branch/outlet (to simplify the description, also referred to as a third-level point or sub-branch point below) to a branch point (to simplify the description, also referred to as a second-level point below). Generally, two end-to-end Srv6 Policies can be established between two points from a sub-branch to a branch. The start-end router on the sub-branch side implements a distributed intelligent path selecting policy, the device independently detects the quality of each SRv6 policy, and determines which SRv6 Policy is used to forward the service based on the detection quality results and the policy optimization policy. Since this part is a private implementation (the results of quality detection need to be transmitted from the end point back to the start point), the devices at both ends need to belong to a same manufacturer to implement quality routing based on intelligent policy routing IPR.

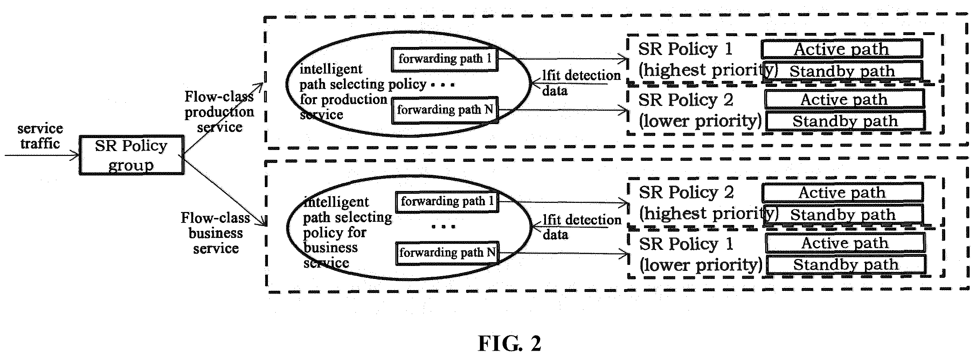

Fig. 2 is an example diagram of a routing device path selecting mechanism for a distributed intelligent policy in a single-segment distributed path selecting network. The routing device path selecting mechanism for the distributed intelligent policy routing IPR includes the following steps:
1) service traffic is first directed iteratively to an end routing policy group SR Policy Group through Color attributes/routing prefix/FlowSpec and other methods.
2) SR Policy Group can match a plurality of services, and each service can be configured with one intelligent path selecting policy.
3) In the intelligent policy routing IPR, end-to-end path quality requirements of the service (path switching indicators: delay, jitter, packet loss rate) and a set of segment routing policy color attributes SR Policy Color can be configured, each SR Policy Color corresponding to one priority. SR Policy Color refers to a color attribute used to identify a specific SR Policy, which is used to classify and mark different SR policies to implement different behaviors and routing policies in the network. For example, SR Policy Color1 corresponds to SR Policy1, SR Policy Color2 corresponds to SR Policy2, and SR Policy 1 has a higher priority than SR Policy2.
4) IPR obtains the path quality of each SR Policy from a path quality measurement module, and selects a SR Policy with high priority and meeting the path quality requirements as a forwarding path.

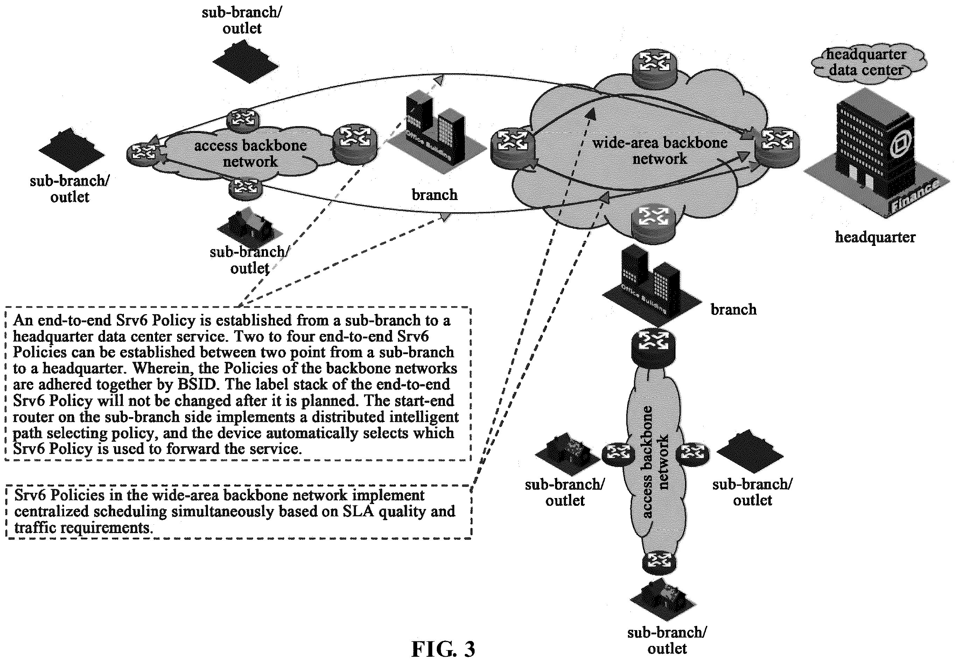

Fig. 3 is an example diagram of a two-segment distributed path selecting and centralized path selecting network. The financial industry networking scenario is taken as an example below to illustrate the two-segment distributed path selecting and centralized path selecting networking and implementation mechanism (sub-branch/outlet → head office data center service):
an end-to-end Srv6 Policy is established for the service path from a sub-branch point to a head office point in the headquarters/head office data center (for clarity of description, the head office point is also called a first-level point). Generally, four or more end-to-end Srv6 Policies can be established between two points from the sub-branch to the headquarter. Among them, the policies of the backbone network are adhered together by binding segment identifiers (BSID). Usually, the label stack of the end-to-end Srv6 Policy will not be changed after it is planned. The head-end router on the sub-branch side implements a distributed intelligent path selecting policy, and the device automatically selects which Srv6 Policy is used to forward the service.

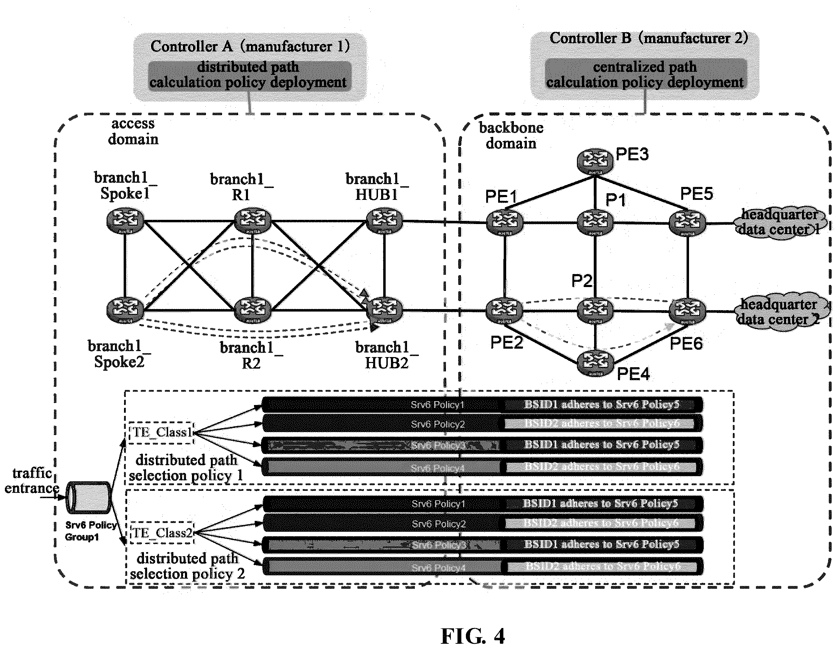

Fig. 4 is an example diagram of a two-segment distributed path selecting and centralized path selecting configuration scheme. As shown in the example of Fig. 4, for a service of traffic engineering class 1, that is, TE_Class1 service, the service level agreement (SLA) of the distributed path selecting policy 1 is set to SLA1 (delay: 30ms, jitter: 30ms, package loss rate: 1%), the path selection is performed from the "Branch 1_Spoke2" point in the access domain to the border gateway "PE6" in the backbone domain. For a TE_Class1 service, 4 optional paths can be planned, respectively corresponding to:
Srv6 Policy1 (associated with Policy5): "Branch 1_Spoke2" → "Branch 1_R2" → "Branch 1_HUB2" --> "PE2" --> "P2" --> "PE6";
Srv6 Policy2 (associated with Policy6): "Branch 1_Spoke2" → "Branch 1_R1" → "Branch 1_HUB2" --> "PE2" --> "PE4" --> "PE6";
Srv6 Policy3 (associated with Policy5): "Branch 1_Spoke2" → "Branch 1_R1" → "Branch 1_HUB2" --> "PE2" --> "P2" --> "PE6";
Srv6 Policy4 (associated with Policy6): "Branch 1_Spoke2" → "Branch 1_R2" → "Branch 1_HUB2" --> "PE2" --> "PE4" --> "PE6";

For Policy5 and Policy6 in the backbone network, the centralized path selecting policy SLA2 is implemented (delay: 20ms, jitter: 20ms, packet loss rate: 0.5%), that is, Controller B in the backbone network calculates the paths in a unified manner, and deploys to the device.

The problem in this scenario is: in the end-to-end quality detection process based on Srv6 Policy, the end point needs to send the quality detection results back to the start point through a private protocol. However, in this scenario, the devices in the backbone domain and the devices in the access domain may belong to different manufacturers, which results in the quality of the Srv6 Policy being unable to be transmitted back to the start point, such that the IPR distributed quality path selecting fails.

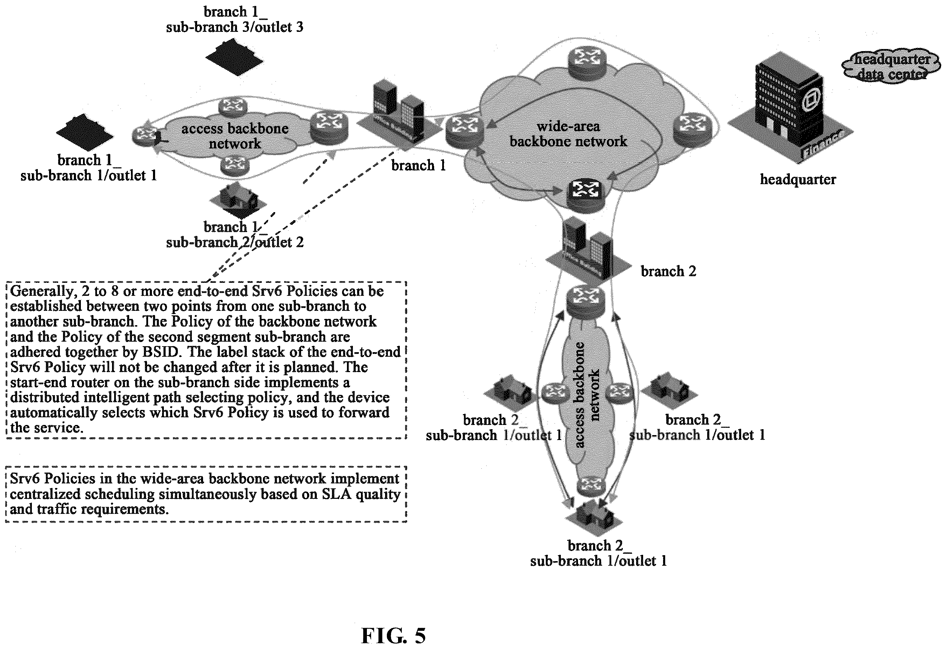

Fig. 5 is an example diagram of a three-segment distributed path selecting and centralized path selecting network. A three-segment distributed path selecting and centralized path selecting networking in the financial industry is taken as an example below to illustrate the implementation mechanism (sub-branch/outlet → head office data center service):
generally, 2 to 8 or more end-to-end Srv6 Policies can be established between two points from one sub-branch to another sub-branch. The Policy of the backbone network and the Policy of the second segment sub-branch are adhered/associated together by binding segment identifiers (BSID). Usually, the label stack of the end-to-end Srv6 Policy will not be changed after it is planned. The head-end router on the sub-branch side implements a distributed intelligent path selecting policy, and the device automatically selects which Srv6 Policy to forward the service.

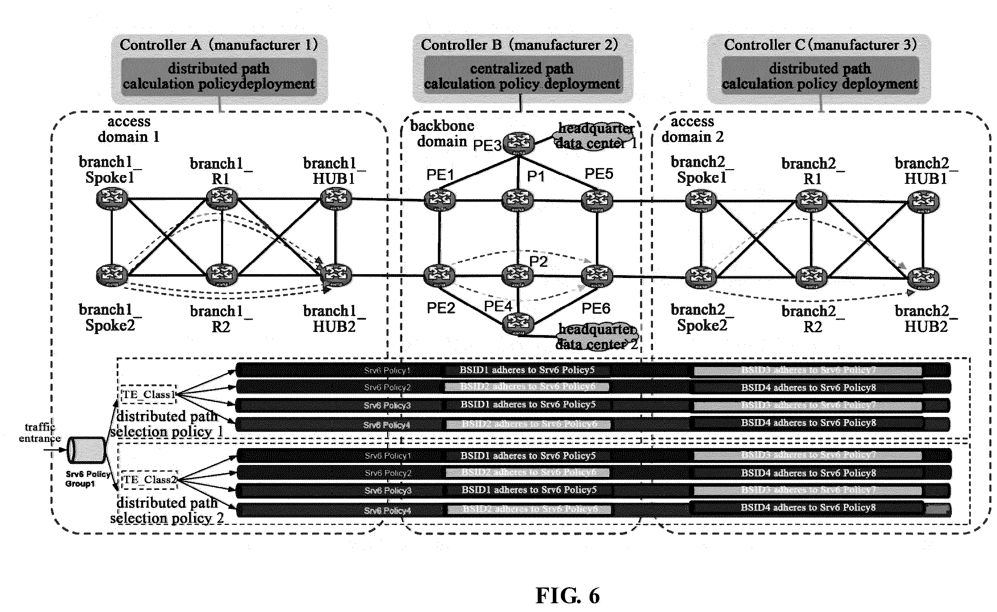

Fig. 6 is an example diagram of a three-segment distributed path selecting and centralized path selecting configuration scheme. For a TE_Class1 service, the distributed path selecting policy adopted is SLA1 (delay: 30ms, jitter: 30ms, package loss rate: 1%), the path selection is performed from the "Branch 1_Spoke2" to "Branch 2_Spoke2". For a TE_Class1 service, 4 optional paths can be planned, respectively corresponding to:
Srv6 Policy1 (adhering to Policy5, and then adhering to Policy7): "Branch 1_Spoke2" → "Branch 1_R2" ----+ "Branch 1_HUB2" → "PE2" --> "P2" → "PE6" → "Branch 2_HUB2" → "Branch 2_R1" ----+ "Branch 2_Spoke2";
Srv6 Policy2 (adhering to Policy6, and then adhering to Policy7): "Branch 1_Spoke2" → "Branch 1_R1" ----+ "Branch 1_HUB2" → "PE2" --> "PE4" → "PE6" → "Branch 2_HUB2" → "Branch 2_R1" ----+ "Branch 2_Spoke2";
Srv6 Policy3 (adhering to Policy5, and then adhering to Policy8): "Branch 1_Spoke2" → "Branch 1_R1" → "Branch 1_HUB2" → "PE2" --> "P2" → "PE6" → "Branch 2_HUB2" → "Branch 2_R2" → "Branch 2_Spoke2";
Srv6 Policy4 (adhering to Policy6, and then adhering to Policy8): "Branch 1_Spoke2" → "Branch 1_R2" ----+ "Branch 1_HUB2" → "PE2" --> "PE4" → "PE6" → "Branch 2_HUB2" → "Branch 2_R2" ----+ "Branch 2_Spoke2";

For Policy5 and Policy6 in the backbone network, the centralized path selecting policy SLA2 is implemented (delay: 20ms, jitter: 20ms, packet loss rate: 0.5%), that is, controller calculates the paths in a unified manner, and deploys to the device.

In the scenario as shown in Fig. 6: in the end-to-end quality detection process based on Srv6 Policy, the end point needs to send the quality detection results back to the start point through a private protocol. However, in this scenario, the devices in the Access Domain 1 and the devices in the Access Domain 2 may belong to different manufacturers, which results in the information about the quality detection result of the Srv6 Policy being unable to be transmitted back to the start point, such that the IPR distributed quality path selecting fails.

After analyzing actual service application scenarios in multiple industries, the inventor found that the main reason for the distributed end-to-end intelligent policy routing of SDWAN SRv6 is that the device manufacturers of the start and end points located in a same domain or different domains are different. The link quality detection result information of Srv6 Policy cannot be effectively transmitted back to the start point. In order to solve the technical problem of IPR quality path selecting failure of distributed intelligent policy routing in a scenario of heterogeneous device manufacturers in the forwarding layer, the present disclosure provides a software-defined wide area network end-to-end policy path selecting scheme, the basic idea of the present disclosure is:
to provide the device with a tunnel-based IFIT quality detection function and the ability to support specifying end point parameters, take the controller as a bridge for synchronizing the blinding segment identifier BSID/the quality detection information of the blinding segment identifier BSID, and facilitate the interaction of quality detection information between devices from different manufacturers, thereby achieving distributed end-to-end policy routing in the SDWAN Srv6 networking environment.

The specific implementation process of the present disclosure will be described in detail below with reference to the accompanying drawings and specific examples. It should be noted that the blocks shown in the flowcharts of the accompanying drawings and examples can be executed in a computer system such as a set of computer-executable instructions. Also, although a logical order is shown in the flowchart diagrams, in some cases, the blocks shown or described may be performed in a different order than shown or described herein.

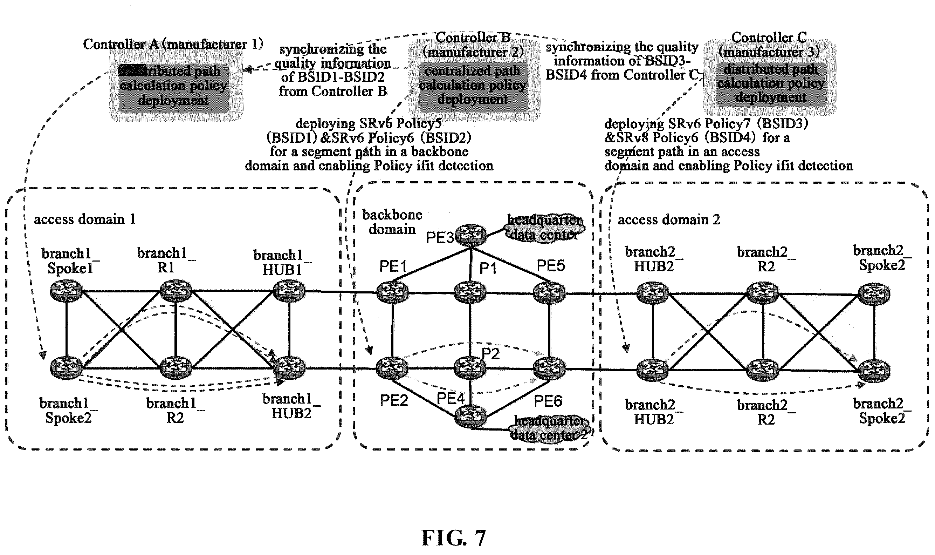

Fig. 7 is an example diagram of SDWAN networking using an end-to-end policy path selecting scheme provided by the present disclosure according to an example of the present disclosure. In this example, a start point (Branch 1_Spoke2) is located in a first access domain (Access Domain 1), and an end point (Branch 2_Spoke2) is located in a second access domain (Access Domain 2). The traffic forwarding paths of the start point and the end point spans a backbone domain.

The backbone domain is controlled by Controller B. On a segmented path of the backbone domain (for example, a segmented path between the PE2 point and the PE6 point), a fifth segment routing policy bound to a first segment identifier (BSID1), SRv6 Policy5 (BSID1), and a sixth segment routing policy bound to a second segment identifier (BSID2), SRv6 Policy6 (BSID2) are deployed through Controller B. The policy-based iFIT (in-band Flow Information Telemetry) detection function is enabled in this segmented path. In the backbone domain, Controller B adopts a centralized path selection /path calculation policy deployment.

The second access domain is controlled by Controller C. On a segmented path of the second access domain (for example, a segmented path between branch 2_HUB2 point and branch 2_Spoke2 point), a seventh segment routing policy bound to a third segment identifier (BSID3), SRv6 Policy7, and an eighth segment routing policy bound to a fourth segment identifier (BSID4), SRv6 Policy8 (BSID4) are deployed through Controller C. The policy-based IFIT path quality detection function is enabled in this segmented path. In the second access domain, Controller C adopts a distributed path selection/path calculation policy deployment.

The first access domain is controlled by Controller A. On a segmented path of the first access domain (for example, a segmented path between the branch 1_Spoke2 point and the branch 1_HUB2 point), a first segment routing policy (Policy1), a second segment routing policy (Policy2), a third segment routing policy (Policy3) and a fourth segment routing policy (Policy4) are deployed for the start point by Controller A, respectively, which correspond to four optional paths. The destination points of the four optional paths, that is, end points EndPoint (Branch 2_Spoke2) are all devices of heterogeneous manufacturers. Controller A deploys the first segment IFIT path quality detection function based on these paths. The four segment routing policies specify end-to-end paths by adhesion/association methods of binding segment identifier BSIDs.

In the example of the present disclosure, controllers located in different domains are allowed to be controllers from different manufacturers, but the path quality detection information needs to be synchronized between the controllers.

Although this example takes the networking scenario of three-segmented distributed path selecting and centralized path selecting as an example, this does not constitute a limitation on the application scenarios of the examples of the present disclosure. Based on the basic ideas and key technical features of the technical solution provided by the present disclosure, the technical solution of the present disclosure is equally applicable to single-segment, two-segment, and three-segment or more networking environments.

In combination of the example in Fig. 7, a path selecting method based on a software-defined wide area network SDWAN end-to-end policy provided by the present disclosure is described below in details. This method is applied to an SDWAN network that adopts a segment routing protocol (such as the SRv6 version). The method includes:
Block 701. in other domains (backbone domain and destination access domain) through which a service flow of a designated service passes, deploying segment routing policies (SRv6 Policy5 and SRv6 Policy6 in the backbone domain, SRv6 Policy7 and SRv6 Policy8 in the access domain) for segmented paths of the service flow by controllers in the domains (Controller B and Controller C), and enabling IFIT path quality detection function;
configuring different binding segment identifiers BSIDs for segment routing policies deployed for the segmented paths of the service flow. For example, Controller B in the backbone domain binds a segment identifier BSID1 in the domain for SRv6 Policy5, binds a segment identifier BSID2 in the domain for SRv6 Policy6, and enables the IFIT path quality detection function of the paths bound to the deployed segment routing policies SRv6 Policy5 and SRv6 Policy6.
Block 702. in a domain (source access domain) where a start point is located, deploying a mapping relationship between the designated service and a first traffic engineering classification (TE_Class1) for the start point (Branch 1_Spoke2) by the controller in the domain (Controller A).

For example, the mapping relationship between service 1 and TE-Class1, and the mapping relationship between service 2 and TE-Class2 are deployed on the start point. The traffic engineering classification TE_Class is used to classify service flows. One type of service flow corresponds to one traffic engineering classification.

Block 703. introducing the service flow of the designated service into a first segment routing policy group (SRv6 Policy Group1) through a routing prefix, the first segment routing policy group being provided with a first intelligent policy routing (IPR1) to which the first traffic engineering classification (TE Class 1) is mapped.

For example, Service 1 and Service 2 are introduced to SRv6 Policy Group1 through a routing prefix, SRv6 Policy Group1 matches IPR1 to which the TE-Class1 is mapped, and matches IPR2 to which the TE-Class2 is mapped.

Block 704. in the source access domain where the start point is located, deploying a plurality of source access domain segment routing policies (SRv6 Policy 1, SRv6 Policy2, SRv6 Policy3, SRv6 Policy4) for the start point by a controller in the source access domain, and configuring each source access domain segment routing policy with a binding segment identifier BSID mapping relationship corresponding to a plurality of end-to-end paths, wherein each source access domain segment routing policy is bound to a different path in the source access domain, and each source access domain segment routing policy has a same end point (EndPoint).

For example, Controller A deploys a plurality of source access domain segment routing policies SRv6 Policy1, SRv6 Policy2, SRv6 Policy3 and SRv6 Policy4 for the start point Branch 1_Spoke2. The end point of these segment routing policies is Branch 2_Spoke2, and each access domain segment routing policy is configured with the BSID mapping relationship. For example, assume that Srv6 Policy1 is bound to BSID9, Srv6 Policy5 is bound to BSID1, and Srv6 Policy7 is bound to BSID3. Srv6 Policy1 is configured with the BSID mapping relationship: BSID9→ BSID1→BSID3, which corresponds to that the paths bound to SRv6 Policy1 in Access Domain 1, Srv6 Policy5 in the backbone domain, and Srv6 Policy7 in Access Domain 2 are associated, thereby a mapping association relationship is established. The same applies to other paths, and so on, so no further description will be given.

Block 705. providing the first intelligent policy routing (IPR1) with matching priorities of the plurality of source access domain segment routing policies (SRv6 Policy1, SRv6 Policy2, SRv6 Policy3, SRv6 Policy4).

For example, the quality requirements of the intelligent policy routing IPR1 are SLA1 (delay: 30ms, jitter: 30ms, packet loss rate: 1%), and the matching priorities of the four configured segment routing policies are: SRv6 Policy1> SRv6 Policy2> SRv6 Policy3 > SRv6 Policy4.

The quality requirements of the intelligent policy routing IPR2 are SLA2 (delay: 20ms, jitter: 20ms, packet loss rate: 2%), and the path matching priority order is: Policy3 >Policy4>Policy 1 >Policy2.

Block 706. in the domain where the start point is located, enabling an In-situ Flow Information Telemetry (IFIT) path quality detection function for a plurality of paths in the domain bound to the plurality of source access domain segment routing policies by the controller in the domain.

The controller in the domain where the start point is located deploys the IFIT path quality detection function for a plurality of paths in the domain corresponding to SRv6 Policy 1, SRv6 Policy2, SRv6 Policy3, and SRv6 Policy4. The point devices of the start point and the end point, as well as the controllers can be devices from different manufacturers, or from a same manufacturer. The technical solution of the present disclosure is compatible with heterogeneous devices from different manufacturers, thereby improving device compatibility of the entire network. In order to reduce the pressure on the controllers, the controllers can also learn the device manufacturer, model and other information of the source and destination points or other controllers through certain detection means or device information synchronization means, so as to determine whether to enable the synchronization of the IFIT path quality detection information between the respective paths among the controllers.

Block 707. the controller (Controller A) in the domain where the start point is located receiving IFIT path quality detection information sent by controllers (Controller B and Controller C) in other domains (the backbone domain and the destination access domain) through which the service flow passes to obtain IFIT path quality detection information corresponding to BSIDs in the other domains in the BSID mapping relationship.

The IFIT path quality detection information sent by the controllers in the other domains through which the service flow passes is reported based on the segment identifier BSID mapping relationship corresponding to the plurality of end-to-end paths of the service flow. For example, the BSID mapping relationship corresponding to the associated paths bound to Srv6 Policy1, Srv6 Policy5 and Srv6 Policy7 are: BSID9→BSID1→BSID3. Controller B in the backbone domain will send IFIT path quality detection information of a path corresponding to Srv6 Policy5 (BSID1) to Controller A in Access Domain 1. Controller C in Access Domain 2 will send IFIT path quality detection information of a path corresponding to Srv6 Policy7 (BSID3) to Controller A in Access Domain 1. Meanwhile, Controller A will obtain IFIT path quality detection information of a path corresponding to Srv6 Policy1 (BSID9) from a locally deployed IFIT path quality detection module. As a result, Controller A can obtain IFIT path quality detection information of all segmented paths in each domain through which the service flow passes in the entire network.

The controller in the domain where the start point is located generates a list of BSIDs according to the BSID mapping relationship, and registers the list of BSIDs for which IFIT path quality detection information need to be synchronized, with the controllers in the other domains associated with the service flow through a preset interface (such as REST or other interface). When the controllers in the associated domains obtain the IFIT path quality detection information corresponding to BSIDs in the domains in the list of BSIDs, the controllers actively notifies the controller in the domain where the start point is located, and the controller in the domain where the start point is located will push the obtained BSIDs to the start point device.

Block 708. the start point calculates end-to-end path quality of the plurality of source access domain segment routing policies (SRv6 Policy 1, SRv6 Policy2, SRv6 Policy3, SRv6 Policy4) according to the IFIT path quality detection information in the domain where the start point is located and the IFIT path quality detection information corresponding to the BSIDs in other domains pushed by the controllers, and selects a service flow path based on the first intelligent policy routing (IPR1).

The splicing for the first segment detection of Policy and end-to-end quality on the device-side is processed as follows:
1) Key steps added to the device command lines are as follows:
   (1) Creating a SID list, adding a SID in the domain to the SID list, and adding BSIDs corresponding to the "Backbone Domain" Policy and "Access Domain 2" Policy and encapsulating in last two hops.
      segment-list segment-list-name
      index index-number ipv6 ipv6-address [verification]
   (2) Configuring the Segment-list bound to Policy, and specifying the endpoint of the IFIT path quality detection for each path and the BISD quality information that needs to be spliced. In theory, it can support associations of more than three hops.
      a. Creating an SRv6 TE Policy candidate path and entering the SRv6 TE Policy candidate path view.
         candidate-paths
      b. Configuring the priority of the candidate path and entering the SRv6 TE Policy candidate path priority view.
         preference preference-value
      c. Configuring the SID list for the SRv6 TE Policy candidate path with a specified priority, specifying the endpoint of the IFIT detection: ifit-endpoint, and specifying the corrected List of BSIDs added for IFIT.
         explicit segment-list segment-list-name ifit-endpoint ipv6-address ifit-result-add ipv6-address-list.
   (3) Configuring ifit-result-add related parameters. When a value refreshed by the controller is not received, a default value is used to calculate the accumulation.
      a. Entering the ifit-result-add view.
         ifit-result-add
      b. Setting the controller to refresh the quality aging time corresponding to the BSID, the unit of the quality aging time is second. When the aging time is up, only the default value will be used for calculation.
         ifit-result aging-time seconds
      c. Setting default values of packet loss and delay corresponding to each BSID. If they are not set, the default value is 0.
         bsid-default-delay ipv6-address time-value
         bsid-default-loos ipv6-address loos-value
      d. Querying default values of packet loss and delay corresponding to each BISD. If ipv6-address is not entered, all BSIDs will be queried.
         display bsid-default-delay [ipv6-address]
         display bsid-default-loos [ipv6-address]
2) Device quality splicing processing process:
   Total delay = the sum of delays of all paths.
   Packet loss rate = 100% - the product of the pass rates of all paths.
3) The device provides the CLI, Netconf&YANG interface and query interface of the BSID refreshed by the controller:
   a. Entering the ifit-result-add view.
      ifit-result-add
   b. Setting default values for packet loss and delay corresponding to the BISD
      bsid-delay ipv6-address time-value
      bsid-loos ipv6-address loos-value
   c. Querying default values of packet loss and delay corresponding to each BISD. If ipv6-address is not entered, all BSIDs will be queried.
      display bsid-delay [ipv6-address]
      display bsid-loos [ipv6-address]

### 3. Synchronization of BSID quality information between controllers:

A controller of a start point registers the List of BSIDs that requires quality information with a controller of the adhesion domain through a REST interface (not limited to REST). When the quality corresponding to these BSIDs changes, the controller of the start point is actively notified, and the controller of the start point will push the obtained BSIDs to devices.

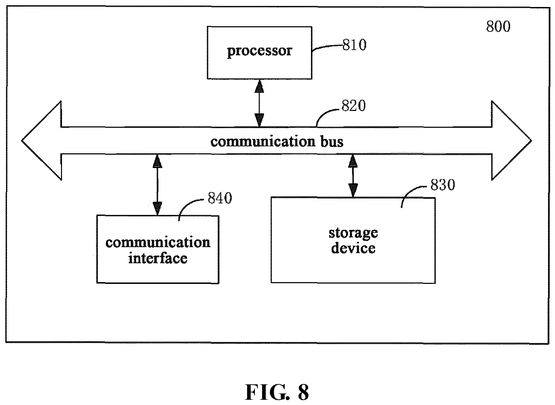

Fig. 8 is a schematic structural diagram of an electronic device used to implement the path selecting method based on a software-defined wide area network end-to-end policy provided by an example of the present disclosure. The device 800 comprises: a processor 810 such as a central processing unit (CPU); a communication bus 820, a communication interface 840, and a storage device 830. The processor 810 and the memory 830 can communicate with each other through the communication bus 820. The memory 830 stores a computer program. When the computer program is executed by the processor 810, the function of one or more blocks in the path selecting method based on a software-defined wide area network end-to-end policy provided by the present disclosure can be realized.

The storage device refers to a means for storing computer programs and/or data based on a certain storage medium. It can be a volatile memory (VM, often called memory) or a non-volatile memory (NVM). Memory refers to an internal storage device that directly exchanges data with the processor. It can read and write data at any time and at a very fast speed. It is used as a storage medium for temporary data of the operating system and other running programs. Memory can be synchronous dynamic random access memory (SDRAM), dynamic random access memory (DRAM), or the like. Non-volatile storage device refers to a storage device that uses a persistent storage medium. It has the characteristics of large capacity and persistent data storage. It can be a storage class memory (SCM), a solid state disk (SSD), a NAND flash memory, a disk, or the like. SCM is the industry's general term for new storage medium between memory and flash memory. It is a composite storage technology that combines persistent storage characteristics and memory characteristics. Its access speed is slower than DRAM but faster than SSD hard disks.

The processor can be a general-purpose processor, including a central processing unit (CPU), a network processor (NP), or the like; it can also be a digital signal processor (DSP), an application specific integrated circuit (ASIC), a field programmable gate array (FPGA) or other programmable logic devices, discrete gate or transistor logic devices, and discrete hardware components.

It should be recognized that examples of the present disclosure can be implemented or carried out by computer hardware, a combination of hardware and software, or by computer instructions stored in non-transitory (or non-persistent) memory. The method can be implemented in a computer program using standard programming techniques, including a non-transitory storage medium configured with a computer program, wherein the storage medium configured in this way causes the computer to operate in a specific and predefined manner. Each program can be implemented in a high-level process or object-oriented programming language to communicate with a computer system. However, if necessary, the program can be implemented in assembly or machine language. In any case, the language can be a compiled or interpretative language. In addition, the program can be run on a programmed dedicated integrated circuit for this purpose. In addition, the operations of the process described in the present disclosure can be performed in any suitable order, unless the present disclosure otherwise indicates or otherwise clearly contradicts the context. The process described in the present disclosure (or variants and/or combinations thereof) can be executed under the control of one or more computer systems configured with executable instructions, and can be implemented as codes (e.g., executable instructions, one or more computer programs, or one or more applications) executed on one or more processors collectively, by hardware or a combination thereof. The computer program includes multiple instructions that can be executed by one or more processors.

Further, the method can be implemented in any type of computing platform operably connected to a suitable computer, including but not limited to a personal computer, a minicomputer, a mainframe, a workstation, a network or distributed computing environment, a separate or integrated computer platform, or in communication with a charged particle tool or other imaging device, or the like. Aspects of the present disclosure can be implemented by machine-readable codes stored on a non-transitory storage medium or device, whether removable or integrated into a computing platform, such as a hard disk, an optical read and/or write storage medium, a RAM, a ROM, or the like, such that they can be read by a programmable computer, and when the storage medium or device is read by the computer, they can be used to configure and operate the computer to perform the process described herein. In addition, the machine-readable codes, or part thereof, can be transmitted via a wired or wireless network. When such media includes instructions or programs that implement the steps described above in conjunction with a microprocessor or other data processor, the invention described in the present disclosure includes these and other different types of non-transitory computer-readable storage medium. When programmed according to the methods and techniques of the present disclosure, the present disclosure also includes the computer itself.

The above description is only for examples of the present disclosure and is not intended to limit the present disclosure. For those skilled in the art, the present disclosure may have various modifications and variations. Any modifications, equivalent substitutions and improvements made within the spirit and principles of the present disclosure should be included in the protection scope of the present disclosure.

## Claims

1. A path selecting method based on a software-defined wide area network end-to-end policy, wherein, the method is applied to a controller in a domain where a start point of a service flow of a designated service is located, the method comprises:
deploying a mapping relationship between the designated service and a first traffic engineering classification for the start point;
issuing configuration to enable the start point to introduce the service flow of the designated service into a first segment routing policy group through a routing prefix, wherein the first segment routing policy group is provided with a first intelligent policy routing to which the first traffic engineering classification is mapped;
deploying a plurality of source access domain segment routing policies for the start point, and configuring each source access domain segment routing policy with a binding segment identifier BSID mapping relationship corresponding to a plurality of end-to-end paths, wherein each source access domain segment routing policy has a different path but has a same end point, and the first intelligent policy routing is provided with matching priorities of the plurality of source access domain segment routing policies;
enabling an In-situ Flow Information Telemetry IFIT path quality detection function for a plurality of paths in the domain bound to the plurality of source access domain segment routing policies;
receiving IFIT path quality detection information sent by a controller in a further domain through which the service flow passes, to obtain IFIT path quality detection information corresponding to BSIDs in the further domain in the BSID mapping relationship;
pushing the obtained IFIT path quality detection information corresponding to the BSIDs in the further domain in the BSID mapping relationship to the start point, such that the start point calculates end-to-end path quality of the plurality of source access domain segment routing policies according to IFIT path quality detection information in the domain where the start point is located and the IFIT path quality detection information corresponding to the BSIDs in the further domain pushed by the controller, and selects a service flow path based on the first intelligent policy routing.

2. The method according to claim 1, wherein, the method further comprises:
generating a list of BSIDs according to the BSID mapping relationship, and registering the list of BSIDs for which IFIT path quality detection information needs to be synchronized, with the controller in the further domain associated with the service flow through a preset interface, such that the controller in the further domain synchronizes the IFIT path quality detection information with the controller in the domain where the start point is located according to the list of BSIDs.

3. A path selecting method based on a software-defined wide area network end-to-end policy, wherein the method is applied to a controller in a further domain other than a source access domain wherein a start point is located, through which a service flow of a designated service passes, the method comprises:
deploying a segment routing policy for a segmented path of the service flow of the designated service through the controller in the further domain;
receiving a list of BSIDs sent by a controller in the source access domain where the start point of the service flow is located, and deploying an IFIT path quality detection function for the segmented path in the further domain in the list of BSIDs;
after receiving IFIT path quality detection information related to the segmented path in the further domain, sending the IFIT path quality detection information of the segmented path corresponding to a BSID in the further domain in the list of BSIDs to the controller in the source access domain where the start point of the service flow is located.

4. A path selecting method based on a software-defined wide area network end-to-end policy, wherein, the method is applied to a start point of a service flow of a designated service, the method includes:
receiving and applying a mapping relationship between the designated service and a first traffic engineering classification deployed by a controller in a source access domain where the start point is located;
introducing the service flow of the designated service into a first segment routing policy group through a routing prefix, wherein the first segment routing policy group is provided with a first intelligent policy routing to which the first traffic engineering classification is mapped;
receiving and applying a plurality of source access domain segment routing policies deployed by the controller in the source access domain, and configuring each source access domain segment routing policy with a binding segment identifier BSID mapping relationship corresponding to a plurality of end-to-end paths, wherein each source access domain segment routing policy is bound to a different path in the source access domain, and each source access domain segment routing policy has a same end point;
receiving and applying matching priorities of the plurality of source access domain segment routing policies provided by the controller in the source access domain for the first intelligent policy routing;
receiving and applying an IFIT path quality detection function deployed by the controller in the source access domain for a plurality of paths in the source access domain bound to the plurality of source access domain segment routing policies;
calculating end-to-end path quality of the plurality of source access domain segment routing policies according to IFIT path quality detection information in the source access domain and IFIT path quality detection information corresponding to BSIDs in a further domain pushed by the controller, and selecting a service flow path based on the first intelligent policy routing.

5. A path selecting apparatus based on a software-defined wide area network end-to-end policy, wherein, the apparatus is applied to a controller in a domain where a start point of a service flow of a designated service is located, the apparatus comprises:
a deploying module, to deploy a mapping relationship between the designated service and a first traffic engineering classification for the start point; deliver configuration to enable the start point to introduce the service flow of the designated service into a first segment routing policy group through a routing prefix, the first segment routing policy group being provided with a first intelligent policy routing to which the first traffic engineering classification is mapped; and deploy a plurality of source access domain segment routing policies for the start point, each source access domain segment routing policy having a different path but a same end point, configure each source access domain segment routing policy with a binding segment identifier BSID mapping relationship corresponding to a plurality of end-to-end paths; the first intelligent policy routing being provided with matching priorities of the plurality of source access domain segment routing policies; enable an In-situ Flow Information Telemetry IFIT path quality detection function for a plurality of paths in the domain bound to the plurality of source access domain segment routing policies;
a path quality information push module, to receive IFIT path quality detection information sent by a controller in a further domain through which the service flow passes to obtain IFIT path quality detection information corresponding to BSIDs in the further domain in the BSID mapping relationship; and push the obtained IFIT path quality detection information corresponding to the BSIDs in the further domain in the BSID mapping relationship to the start point, such that the start point calculates end-to-end path quality of the plurality of source access domain segment routing policies according to IFIT path quality detection information in the domain where the start point is located and the IFIT path quality detection information corresponding to the BSIDs in the further domain pushed by the controller, and selects a service flow path based on the first intelligent policy routing.

6. The apparatus according to claim 5, wherein, the apparatus further comprises:
a BSID list generating module, to generate a list of BSIDs according to the BSID mapping relationship, register the list of BSIDs for which IFIT path quality detection information needs to be synchronized, with the controllers in the further domain associated with the service flow through a preset interface, such that the controller in the further domain synchronizes the IFIT path quality detection information with the controller in the domain where the start point is located according to the list of BSIDs.

7. A path selecting apparatus based on a software-defined wide area network end-to-end policy, wherein, the apparatus is applied to a controller in a further domain other than a source access domain wherein a start point is located, through which a service flow of a designated service passes, the apparatus comprises:
a second deploying module, to deploy a segment routing policy for a segmented path of the service flow of the designated service; receive a list of BSIDs sent by a controller in the source access domain where the start point of the service flow is located, and deploy an IFIT path quality detection function for the segmented path in the further domain in the list of BSIDs;
a quality information synchronization module, to send, after receiving IFIT path quality detection information related to the segmented path in the domain, the IFIT path quality detection information of the segmented path corresponding to a BSID in the further domain in the list of BSIDs to the controller in the source access domain where the start point of the service flow is located.

8. A path selecting apparatus based on a software-defined wide area network end-to-end policy, wherein, the apparatus is applied to a start point of a service flow of a designated service, the apparatus comprises:
a configuration module, to receive and apply a mapping relationship between the designated service and a first traffic engineering classification deployed by a controller in a source access domain where the start point is located; receive and apply configuration issued by the controller in the source access domain to introduce the service flow of the designated service into a first segment routing policy group through a routing prefix, the first segment routing policy group being provided with a first intelligent policy routing to which the first traffic engineering classification is mapped; receive and apply a plurality of source access domain segment routing policies deployed by the controller in the source access domain, each source access domain segment routing policy being bound to a different path in the source access domain, each source access domain segment routing policy having a same end point, configure each source access domain segment routing policy with a binding segment identifier BSID mapping relationship corresponding to a plurality of end-to-end paths; receive and apply matching priorities of the plurality of source access domain segment routing policies provided by the controller in the source access domain for the first intelligent policy routing; receive and apply an IFIT path quality detection function deployed by the controller in the source access domain for a plurality of paths in the source access domain bound to the plurality of source access domain segment routing policies;
a path selecting module, to calculate end-to-end path quality of the plurality of source access domain segment routing policies according to IFIT path quality detection information in the source access domain where the start point is located and IFIT path quality detection information corresponding to BSIDs in a further domain pushed by the controller, and select a service flow path based on the first intelligent policy routing.

9. An electronic device comprising a processor, a communication interface, a storage medium, and a communication bus, wherein the processor, the communication interface, and the storage medium complete communication with each other through the communication bus;
the storage medium is to store a computer program;
the processor is to implement the method according to any one of claims 1 to 4 when executing the computer program stored on the storage medium.

10. A storage medium having a computer program stored thereon, wherein the computer program, when executed by a processor, implements the method according to any one of claims 1 to 4.
